# EUROPEAN PATENT APPLICATION

(11) **EP 4 318 312 A1**
(43) Date of publication of application: **07.02.2024**
(21) Application number: 22188555.1
(22) Date of filing: 03.08.2022
(51) Int. Cl.: G06N 3/04, G06N 3/08, G06N 3/063

(54) **METHOD FOR EFFICIENT MACHINE LEARNING INFERENCE IN THE EDGE-TO-CLOUD CONTINUUM USING TRANSFER LEARNING**

(71) Applicant: Siemens Aktiengesellschaft, 80333 München (DE)
(72) Inventor: Schüle, Tobias, 80636 München (DE)
(74) Representative: Siemens Patent Attorneys

(57) **Abstract**

The present disclosure relates to a system and method for efficient inference in an edge-to-cloud continuum using a transfer learning approach, more particularly to a system and method for efficiently separating and deploying a trained machine learning model such as a neural network in an edge-to-cloud continuum using a transfer learning approach, and to a method for triggering and performing a differential retraining of the model split over the edge-to-cloud continuum.

## Description

The present disclosure relates to a system and method for efficient inference in an edge-to-cloud continuum using a transfer learning approach, more particularly to a system and method for efficiently separating and deploying a trained machine learning model such as a neural network in an edge-to-cloud continuum using a transfer learning approach, and to a method for triggering and performing a differential retraining of the model split over the edge-to-cloud continuum.

For several years now, machine learning methods have been used more and more in the industry and have many applications to improve industrial processes and products.

In this context, data analysis applications that require a large amount of computing capacity when using these machine learning methods are traditionally implemented on remote servers, otherwise known as a cloud or cloud computing. This cloud allows to offer a rich ecosystem of various tools and virtually unlimited computing resources. Indeed, the training of machine learning models such as neural networks benefits greatly from the availability of scalable infrastructures that are available on demand in the cloud.

An example of an application is a production site where various types of parts are produced and where cameras are installed to take pictures of the parts at the end of production so that production defects can be detected on the pictures taken and passed through a machine learning model that is trained to detect defects on the parts produced using pictures of the parts as training data.

This cloud computing approach poses several challenges to its implementation.

The first problem is that the amount of data to be used as input to the machine learning model is very large. Indeed, this training data usually comes from one or more field devices such as measuring devices, cameras, or controllers (such as Programmable Logic Controllers - PLC), etc. Moreover, these field devices can be scattered at various locations. In addition, these field devices can be scattered in a variety of locations. For example, when these field devices are positioned on a production site, on an intelligent electricity distribution network, on a railroad network, within a hospital, etc. Moreover, these field devices can be located at a great distance from the physical servers implementing the cloud computing. In other words, this cloud-based machine learning training approach gathering data from field devices as described above is very network resource intensive, due to the very large amount of data that needs to be communicated across the network.

The second problem is that this data may be sensitive for its users, who do not necessarily want this data to circulate in large quantities on the cloud computing network. For example, the operator of a factory may not want data about its industrial operations, its trade secrets, its production secrets, etc. to be accessible on such a network.

A known approach is called edge computing. In this approach, remotely controlled computing infrastructures are arranged near the field devices where data is generated, for example in the form of edge devices. This approach mitigates the two previously mentioned problems with transferring data to the cloud. Under this edge computing approach, the model training can continue to occur in the cloud, but the execution occurs in a second stage only at the edge computing device, which is the only one receiving data from the field devices. In other words, once the machine learning model is trained, there is no more sensitive or high-volume data flowing over the network from the field devices to the cloud servers. In this approach, the trained models are deployed in the edge devices where they can process the data from the field devices. In this case, only metadata about the model execution and inference results can or will be sent to the cloud, thus reducing the excess communication to the network. In addition, sensitive data is kept locally, which solves the privacy issue that is so important to many users.

This approach relates to a process that takes place partly in the cloud and partly at the edge device level. At the cloud level, a planning step of the solution to be implemented and the creation of a first machine learning model is performed. A step of training, testing and optimization of the model is subsequently performed. This model is finally validated as to its quality and accuracy. Finally, the model can be deployed onto target edge devices. Within these target edge devices, input data from the environment is acquired (e.g., from field devices). An inference phase using the model and the input data provides the model output data. A monitoring phase of the model performance can then be performed directly within the edge device, with feedback to the cloud.

Unfortunately, this approach also has disadvantages, one of which is that if changes need to be made to the machine-learning trained model, the entire implementation process described above with planning, training and validation from the cloud will have to be reperformed. A full deployment of the new model to each of the edge devices will then have to be reprocessed. Such a deployment includes many subtasks such as format conversions, packaging, upload to model repository, transfer to the device, unpackaging, loading into inference framework, application restart etc.

There is therefore a need for a solution to implement the edge computing approach in which we can avoid or substantially limit the cases where this complex step of complete model retraining and exhaustive redeployment is required, while preserving the advantage of not having to transfer a significant amount of data continuously to the cloud in order to continuously use and/or train the model.

The solution proposed by the present invention relates to separating the machine learning/neural network model used into two parts. One part of this model is deployed and executed in the edge device, while the second part can be deployed and executed in the cloud. This approach is made possible by the fact that most machine learning models or neural networks used in machine learning include many interconnected layers.

A first aspect of the present disclosure is a method for distributed deployment of a machine learning model in an edge-to-cloud continuum of a multi-layer computer system adapted for distributed deployment of machine learning models, the method comprising the step of: providing a machine learning model; separating the machine learning model, between a cloud portion to be deployed in a cloud layer of the system and an edge portion to be deployed in an edge layer of the system, wherein the machine learning model comprises several layers ***Iₒ*** to ***I_{N}*** where N is the total number of layers in the model, and the step of separating comprises determining a layer level k at which the machine learning model is to be separated between the edge portion comprising layers near a machine learning model input (***Iₒ*-*Iₖ*)** and a cloud portion comprising layers of the model (***I*_{*k*+1} - *I_{N}*),** corresponding to the layers close to the model output, wherein the choice of the layer level k is determined based on either a threshold of data volume to be transferred between the different layers of the system, a minimum desired level of accuracy of the model, or a balanced combination between these two parameters; deploying the cloud layers **(*I*_{*k*+1}-*I_{N}*)** of the separated machine learning model in the cloud layer of the system for use at that system level, and deploying the edge layers **(*Iₒ-Iₖ*)** of the separated machine learning model in an edge device (201) of the edge layer of the system for use at that system level.

An embodiment of the first aspect of the present disclosure is a method wherein the step of separating comprises: receiving, by a comparison and separation component, the machine learning model; receiving, by the comparison and separation component, an accuracy of the machine learning model; determining, by the comparison and separation component, the layer level k at which the machine learning model is to be separated based on the accuracy of the model.

An embodiment of the first aspect of the present disclosure is a method wherein the step of separating comprises: receiving, by a comparison and separation component, the machine learning model; receiving, by the comparison and separation component, a threshold for a volume of data to be transferred between the edge layer and the cloud layer; determining, by the comparison and separation component, the layer level k at which the machine learning model is to be separated based on the received threshold for the volume of data.

An embodiment of the first aspect of the present disclosure is a method wherein the step of separating comprises: receiving, by a comparison and separation component, the machine learning model; receiving, by the comparison and separation component, a threshold for a volume of data to be transferred between the edge layer and the cloud layer and an accuracy of the machine learning model; determining, by the comparison and separation component, the layer level k at which the machine learning model is to be separated based on an optimized balance between the received accuracy and the received threshold for the volume of data.

An embodiment of the first aspect of the present disclosure is a method further comprising the step of: obtaining, by the edge device, field data from one or more field devices.

An embodiment of the first aspect of the present disclosure is a method further comprising the step of: using the field data obtained by an inference engine of the edge device and sending the result of the inference engine to the cloud layer of the system for use in an inference engine of the cloud layer.

A second aspect of the present disclosure is a method for updating a deployed distributed machine learning model in an edge-to-cloud continuum of a multi-layer computer system adapted for distributed deployment of machine learning models, comprising the steps of: triggering the retraining of the deployed distributed machine learning model, wherein the deployed distributed machine learning model has cloud layers (***I*_{*k*+1}-*I_{N}***) which are deployed in a cloud layer of the system and edge layers **(*Iₒ - Iₖ*)** which are deployed in an edge layer of the system; retraining the cloud layers (***I*_{*k*+1}-*I_{N}***) of the machine learning model; measuring the accuracy of the model with the retrained cloud layers (***I*_{*k*+1}*-I_{N}***), and comparing the accuracy of the model with the retrained cloud layers with the accuracy of the deployed distributed machine learning model; if the accuracy of the model with the retrained cloud layers (***I*_{*k*+1}-*I_{N}***) has decreased or if accuracy of the model with the retrained cloud layers (***I*_{*k*+1}-*I_{N}***) has decreased beyond an acceptable degradation threshold, retraining completely the machine learning model including the edge layers **(*Iₒ*-*Iₖ*)** of the machine learning model, and deploying the newly trained cloud layers (***I*_{*k*+1}-*I_{N}***) of the machine learning model to the cloud layer of the system and deploying the newly trained edge layers **(*Iₒ* - *Iₖ*)** of the model to the edge layer of the system, alternatively, if the accuracy of the model has not decreased or has not decreased beyond the acceptable degradation threshold, deploying the cloud layers (***I*_{*k*+1}-*I_{N}***) of the machine learning model within the cloud layer of the system.

A third aspect of the present disclosure is a cloud layer sub-system for a multi-layer computer system adapted for distributed deployment of machine learning models comprising: a comparison and separation component, configured to receive a machine learning model, and to separate the machine learning model, between a cloud portion to be deployed in a cloud layer of the system and an edge portion to be deployed in an edge layer of the system, wherein the machine learning model comprises several layers ***Iₒ*** to ***I_{N}*** where N is the total number of layers in the model, and the step of separating comprises determining a layer level k at which the machine learning model is to be separated between the edge portion comprising layers near a machine learning model input (***Iₒ*-*Iₖ*)** and a cloud portion comprising layers of the model **(*I*_{*k*+1}-*I_{N}*),** corresponding to the layers close to the model output, wherein the choice of the layer level k is determined based on either a threshold of data volume to be transferred between the different layers of the system, a minimum desired level of accuracy of the model, or a balanced combination between these two parameters; an edge connector component configured to send the edge portion of the machine learning model to an edge device in the edge layer of the system and to receive from the edge device a result of an inference engine of the edge device; and an inference engine configured to use the received result of the inference engine of the edge device.

An embodiment of the second aspect of the present disclosure is a cloud layer sub-system, wherein the comparison and separation component is further configured to: receive an accuracy of the machine learning model; determine the layer level k at which the machine learning model is to be separated based on the accuracy of the model.

An embodiment of the second aspect of the present disclosure is a cloud layer sub-system, wherein the comparison and separation component is further configured to: receive a threshold for a volume of data to be transferred between the edge layer and the cloud layer; determine the layer level k at which the machine learning model is to be separated based on the received threshold for the volume of data.

An embodiment of the second aspect of the present disclosure is a cloud layer sub-system, wherein the comparison and separation component is further configured to: receive a threshold for a volume of data to be transferred between the edge layer and the cloud layer and an accuracy of the machine learning model; determine the layer level k at which the machine learning model is to be separated based on an optimized balance between the received accuracy and the received threshold for the volume of data.

A fourth aspect of the present disclosure is an edge device for an edge layer of a multi-layer computer system adapted for distributed deployment of machine learning models, the edge device comprising: a processor, a memory and a wired or wireless communication means for communicating with one or more field devices; and a cloud connector component, configured to receive from the cloud layer of the system, an edge portion of a machine learning model to be deployed in an edge layer of the system; an edge layer storage component, configured for storing the received edge portion of the machine learning model; an inference engine, configured to use the edge portion of the machine learning model stored in the edge layer storage component with field data from the one or more field device as input, and to output an inference result to the cloud using the cloud connector component.

A fifth aspect of the present disclosure is a multi-layer computer system adapted for distributed deployment of machine learning models, the system comprising: a cloud layer sub-system according to a third aspect; one or more edge device according to a fourth aspect; and one or more field devices.

A sixth aspect of the present disclosure is a computer program product comprising instructions which, when the program is executed by a computer, cause the computer to carry out the steps of the method of the first aspect.

A seventh aspect of the present disclosure is a computer-readable storage medium comprising instructions which, when executed by a computer, cause the computer to carry out the steps of the method of the first aspect.

Where appropriate, the above-mentioned configurations and developments can be combined in any manner. Further possible configurations, developments and implementations of the disclosure also include combinations, which are not explicitly mentioned, of features of the disclosure which have been described previously or are described in the following with reference to the embodiments. In particular, in this case, a person skilled in the art will also add individual aspects as improvements or supplements to the basic form of the present disclosure.

The present disclosure is described in greater detail in the following on the basis of the embodiments shown in the schematic figures of the drawings, in which:
- Fig. 1: is a representation of a convolutional neural net-work or CNN commonly used in machine learning;
- Fig. 2: illustrates an embodiment of a multilayer computer system configured to implement the present invention;
- Fig. 3: illustrates a method of setting up and using a multi-layer computer system as shown in Figure 2;
- Fig. 4: illustrates a method for updating the machine learning model implemented in a multi-layer computer system as shown in Figure 2.

The appended drawings are intended to provide further understanding of the embodiments of the disclosure. They illustrate embodiments and, in conjunction with the description, help to explain principles and concepts of the disclosure. Other embodiments and many of the advantages mentioned become apparent in view of the drawings. The elements in the drawings are not necessarily shown to scale.

In the drawings, like, functionally equivalent and identically operating elements, features and components are provided with like reference signs in each case, unless stated otherwise.

Hereinafter, the embodiments will now be described in detail with reference to the accompanying drawings. However, the disclosure cannot be limited to the embodiment in which the idea of the disclosure is presented, and another embodiment included within range of idea of another backward disclosure, or the present disclosure may be easily proposed by addition, change, deletion and the like of another element.

The terms used in this specification were selected to include current, widely used general terms. In certain cases, a term may be one that was arbitrarily established by the applicant. In such cases, the meaning of the term will be defined in the relevant portion of the detailed description. As such, the terms used in the specification are not to be defined simply by the name of the terms but are to be defined based on the meanings of the terms as well as the overall description of the present disclosure.

Hereinafter, embodiments of the present disclosure will be described in detail with reference to the accompanying drawings. It should be noted that the same reference numerals are used to designate the same or similar elements throughout the drawings.

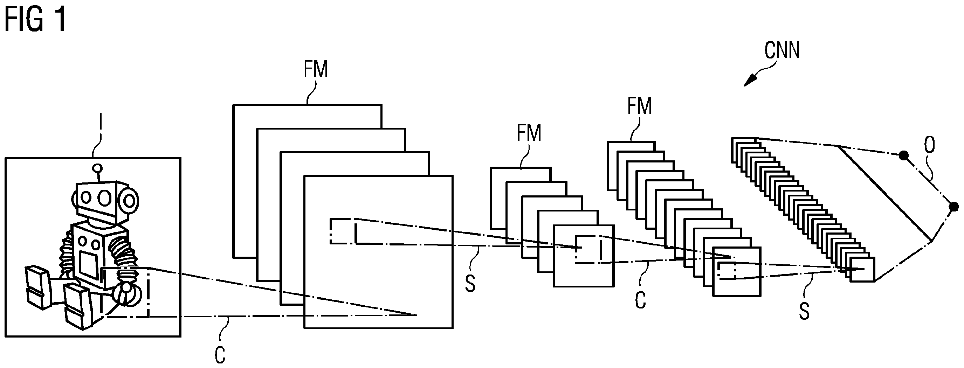

Fig. 1 is a representation of a convolution neural network CNN commonly used in machine learning. In this example, data flows from left to right. Such a network is formed by a stack of distinct layers that transform input data I into output data O through a differential function. These input data I go through a first convolution phase C allowing to obtain feature maps FM, which can then be subsampled again during a subsampling step S and go through a convolution step C again. These steps can be repeated. At the end of the chain, we obtain output data O.

It is interesting to note that in this type of model, the amount of data generally decreases from layer to layer. In the example of object detection, the input data is an image that may require many megabytes, while the output data may comprise only a very small number of bytes specifying for example the coordinates of the detected object. Another aspect is that the layers closest to the input detect relatively generic features, such as edges or shapes in an image, while the layers closest to the output detect complex objects (e.g., a robot or a cat). These two findings have led to the concept of transfer learning in which only the last layers (closest to the output) are trained for a specific use and the previous layers (closest to the input) are reused for other use cases or only retrained sporadically. The present invention makes use of these findings to reduce the amount of data transferred from the edge devices to the cloud and to reduce the number of model updates sent from the cloud to the edge devices.

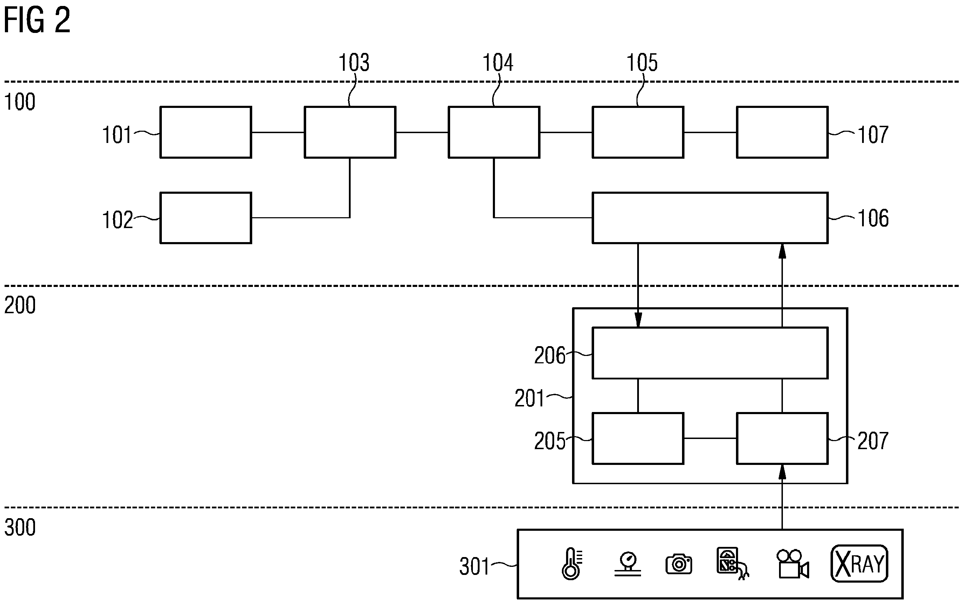

Fig. 2 illustrates a system 1 according to the present invention. This system comprises three successive layers: a cloud 100 or cloud layer implemented on remote servers of a network; an edge layer 200 comprising edge devices adapted for implementation of the present invention, and the field layer 300 where the field devices are located.

The cloud layer 100 contains several components that can be implemented in different ways, i.e., on the same server or on different servers, these servers comprising processors, memories and communication modules connecting them to the network of the cloud layer 100 and the edge layer 200. In this cloud layer 100, there can be found a model repository storage component or training history 101, where machine learning models such as neural networks are stored. The cloud layer 100 also includes a training data storage component 102 that store data that is used or has been used to train the different models or that can be used to train a new model. New training data may be saved in this storage component 102, for example, data from an edge device 201, field devices 301, or simply uploaded by a user. The training data storage component 102 and the model repository storage component 101 are connected to a training engine component 103 that is configured to train new models or to refine, i.e., re-train, existing models in the model repository storage component from training data in the training data storage component 102.

The cloud layer further comprises a comparison and separation component 104, which is configured to receive the machine learning model and to perform the separation between the two parts of the trained model. Indeed, the machine learning model, which can take the form of a neural network, comprises several layers ***Iₒ*** to ***I_{N}*** where N is the total number of layers in the model. The comparison and separation component 104 is configured to determine at which layer k the model should be separated so that the layers near the input of the model ***Iₒ*** to ***Iₖ*** are deployed at the edge layer 200 in an edge layer storage component 205 (e.g., directly in the edge device 201), while the remaining layers of the model ***I*_{*k*+1}** to ***I_{N},*** corresponding to layers near the model output, remain within the cloud layer in, for example, a cloud layer storage component 105. The cloud layer 100 further includes an edge connection component 106 that enables communication with a cloud connection component 206 located in an edge device 201 in the edge layer 200. This communication enables deployment of the edge layers of the model in the edge layer storage component 205 of the edge device 201. Within the cloud layer, a certain amount of data will be received from the cloud connector 206 of the edge device 201 and sent to an inference engine 107 that will enable the cloud layers of the model to be run directly at the cloud 100. Among other the inference engine 107 can receive the result of the inference engine 207 in the edge device.

The choice made regarding the position of the separation layer k depends on two parameters: the desired accuracy of the model and the volume of data that can be transferred between the edge 200 layer and the cloud 100 layer. In other words, in the first case, accuracy tests can be carried out on a certain population and a minimum desired accuracy level can be defined, and the parameter k will be determined on the basis of this minimum desired accuracy level that is wished to be achieved. For instance, the comparison and separation component 104 can be configured to receive value of accuracy from the data training engine component 103 and to perform the separation of the model based on this received accuracy. By this approach, the comparison and separation component 104 can automatically separate the machine learning model. A second approach is to define a threshold for the volume of data to be transferred between the edge layer 200 and the cloud layer 100. For example, define a limit of 1 megabit/minute and adapt the model separation to this design constraint. The comparison and separation component 104 can be configured to receive an input from a use defining the threshold for the volume of data to be transferred and to perform the separation of the model based on this received threshold. A third approach relates to finding a balance between an accuracy objective and a volume objective of data transferred between the layers. In this last approach, one can imagine variations of adjustment factor or weight to vary the importance of these two parameters and when determining an operating balance leading to the determination of a certain parameter k corresponding to the separation layer. This third approach can also be performed by the comparison and separation component 104 upon reception of the accuracy and of the threshold. The comparison and separation component 104 can define an optimized balance between the two parameters, wherein the accuracy is maximized whilst the volume of data transferred between the edge layer of the system and the edge layer of the system is minimized.

The edge layer 200 of the system 1 includes one or more edge devices 201. These one or more edge devices 201 may include a processor, memory, and wired or wireless communication means. Functionally, this or these edge devices 201 include as component the cloud connector 206 and the edge layer storage component 205 as described above, but also an inference engine 207 directly connected (by their communication means) to one or more field devices 301, such as sensors of any kind, cameras, sensors of various measurements, etc.

With this configuration, each part of the model will be executed separately using a different inference engine. With this separation of the machine learning model into a part corresponding to the cloud layers and a part corresponding to the edge layers of the model, there is no need to transfer a significant amount of data from the field devices 301 through the cloud connector 206 to the cloud layer of the system. Thus, it is possible to train the edge layers of the model less frequently and it will be possible to train the cloud layers more frequently without having to perform heavy de-ployments at the system edge layer. To do this, the cloud layer components 100 may be configured to determine, for example, a level of accuracy of the models from the training data and/or feedback. For example, the comparison and separation component 104 may be configured to perform this task. When this level of accuracy deteriorates, an update to the implemented model may be initiated.

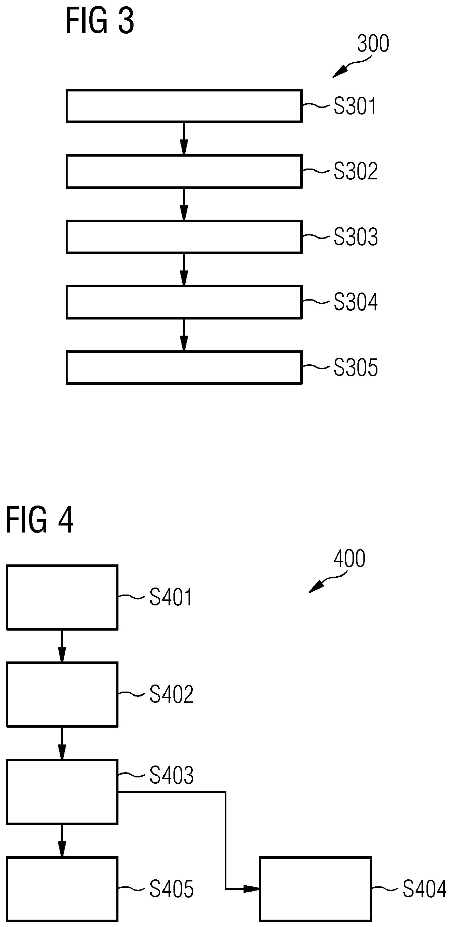

Fig. 3 illustrates a method M300 of setting up and using a system 1 as shown in Fig. 2, using a machine learning model distributed among a cloud layer 100 and an edge layer 200. In other words, a method of setting up and using the system in which the machine learning model is distributed among cloud servers in a computer network, one or more edge devices 201 connected to the cloud servers and connected to one or more field devices 301 located in a field layer 300.

In a step S301, a machine learning model is provided. This machine learning model may be stored in the model reference storage component 101 or may be the result of directly training a model in a training engine 103. This step may be accomplished by retrieving a machine learning model, by the comparison and separation component 104, from a plurality of machine learning models stored in the model reference storage component or training history 101.

In a step S302, the made available model is separated, for example by the compare and separate component 104, between a cloud portion and an edge portion. More specifically, the machine learning model comprises several layers ***Iₒ*** to ***I_{N}*** where N is the total number of layers in the model. The separation step includes a sub-step of determining the layer level k at which the model is to be separated between layers near the model input ***Iₒ*** to ***Iₖ*** and the other layers of the model ***I*_{*k*+1}** to ***I_{N}*,** corresponding to the layers close to the model output.

The choice of the position of the separation layer k can be made as explained previously, i.e., either from a threshold of data volume to be transferred between the different layers of the system, or from a minimum desired level of accuracy of the model, or from a balanced/weighted combination between these two parameters as explained previously.

In step S303, the cloud layers of the model are deployed within a corresponding component of the system cloud layer for use at that system level. In this same step, the edge layers of the machine learning model may be deployed within an edge device 201 as previously explained in the passages describing Fig. 2.

Optionally, a step S304 may involve obtaining field data from the one or more field devices 301. This step may be performed by one or more edge devices 201.

Optionally, a step S305 may involve using the field data obtained by the inference engine 207 of the edge device(s) 201. This step may also include sending some of the obtained field data to the cloud servers and/or the result of the inference engine 207 of the edge device, for example, using an edge connector 106 as defined above so as to obtain the data needed to operate the inference engine 107 located in the cloud 100.

Fig. 4 illustrates a method M400 for updating the machine learning model implemented in a system like the one shown in Fig. 2.

A first step S401 comprises a step of triggering the retraining of the machine learning model or neural network. This triggering can be the result of several events or parameter changes. For example, this triggering can be based on a confidence rate in the model output (i.e., in the output of the inference engines). A threshold can be defined at which the model must be retrained when one or the average of a sample of results have fallen below this confidence threshold. The monitoring of this confidence threshold may be performed by a component within the cloud layer 100 such as the cloud inference engine 107. The triggering may also be based on a timing or a calendar that would define durations from which or dates on which the model must be retrained, respectively. These parameters may be set by a user at the time of initial deployment of the training model, or they may be changed by a user during operation of the model. Another parameter that can be taken into account to trigger the re-training of the neural network can be a number of uses/cycles of the model or a number of output data from which it is considered that the model should be re-trained. In the example presented earlier of the use of this neural network to determine from a camera taking pictures of produced parts when these parts are defective, it could happen for example that the type of produced parts is changed and no longer corresponds as well to the training data of the model corresponding to different parts. In this case, there could be a drop in the confidence level of the result obtained or a drop in accuracy. With the configuration described above, the system will be able to determine by itself that there is a need to re-train the machine learning model. In the same way, a change in the type of production can be a triggering event for a user to launch an update and a re-training of the machine learning model knowing that the parts produced will be different and therefore that the defects and their detection will be different from the previously trained model.

At a step S402, the cloud layers ***I*_{*k*+1}** to ***I_{N}*** of the model will be re-trained while the Edge ***Iₒ*** to ***Iₖ*** remain fixed. In other words, only the cloud layer will undergo a retraining step and there will be no redeployment of edge layers of the model to the edge layer of the system (i.e., to the edge devices 201) .

In a step S403, the accuracy of the model is measured and compared to the current version of the model. In this step, a comparison threshold may be defined that corresponds to an acceptable degradation threshold. If the accuracy of the model has decreased or if it has decreased beyond the acceptable degradation threshold, a step S404 of complete retraining of the machine learning model is carried out, i.e., a re-training of all layers 1 to N of the machine learning model. In this case, the new model can be stored in the model reference storage component 101. Once this new model has been trained, the cloud layers of the model will be made available to the inference engine 107 of the cloud layer 100, while the edge layers of the model will be deployed in the edge devices 201 for use by their inference engine.

Alternatively, if the accuracy of the model has not decreased or has not decreased beyond the acceptable degradation threshold, a step S405 of deploying the cloud layers of the model within the cloud will be performed in order to be used in the cloud inference engine 107.

This approach has the advantage of limiting the number of de-ployments required to be performed in the edge devices when updating the model. Indeed, in many cases only the layers close to the input will be updated without the need for deployment procedures to the edge layer. Moreover, the most sensitive data of the model, i.e., the ones less abstracted and closer to the raw data from the field devices which are also the biggest in terms of size, can be positioned in the edge 200 layer. As this edge layer which can be physically placed in a protected or user-controlled environment, the sensitive data does not circulate on the cloud. Further, as the data with the biggest size remain at the edge layer, i.e., close to the field devices, the amount of data to be transferred is kept low, thus the approach is less network resource intensive.

Although the present disclosure has been described above by way of preferred embodiments, it is not limited thereto, but rather can be modified in a wide range of ways. In particular, the disclosure can be changed or modified in various ways without deviating from the core of the disclosure.

## Claims

1. A method for distributed deployment of a machine learning model in an edge-to-cloud continuum of a multi-layer computer system adapted for distributed deployment of machine learning models, the method comprising the step of:
- providing (S301), a machine learning model;
- separating (S302) the machine learning model, between a cloud portion to be deployed in a cloud layer (100) of the system and an edge portion to be deployed in an edge layer (200) of the system, wherein the machine learning model comprises several layers ***Iₒ*** to ***I_{N}*** where N is the total number of layers in the model, and the step of separating comprises determining a layer level k at which the machine learning model is to be separated between the edge portion comprising layers near a machine learning model input (***Iₒ*-*Iₖ*)** and a cloud portion comprising layers of the model **(*I*_{*k*+1} - *I_{N}*),** corresponding to the layers close to the model output, wherein the choice of the layer level k is determined based on either a threshold of data volume to be transferred between the different layers of the system, a minimum desired level of accuracy of the model, or a balanced combination between these two parameters;
- deploying (S303) the cloud layers **(*I*_{*k*+1}*-I_{N}*)** of the separated machine learning model in the cloud layer (100) of the system for use at that system level, and deploying (S303) the edge layers (***Iₒ*-*Iₖ*)** of the separated machine learning model in an edge device (201) of the edge layer (200) of the system for use at that system level.

2. The method for distributed deployment of a machine learning model in an edge-to-cloud continuum according to claim 1, wherein the step of separating comprises:
- receiving, by a comparison and separation component (104), the machine learning model;
- receiving, by the comparison and separation component (104), an accuracy of the machine learning model;
- determining, by the comparison and separation component (104), the layer level k at which the machine learning model is to be separated based on the accuracy of the model.

3. The method for distributed deployment of a machine learning model in an edge-to-cloud continuum according to claim 1, wherein the step of separating comprises:
- receiving, by a comparison and separation component (104), the machine learning model;
- receiving, by the comparison and separation component (104), a threshold for a volume of data to be transferred between the edge layer (200) and the cloud layer (100) ;
- determining, by the comparison and separation component (104), the layer level k at which the machine learning model is to be separated based on the received threshold for the volume of data.

4. The method for distributed deployment of a machine learning model in an edge-to-cloud continuum according to claim 1, wherein the step of separating comprises:
- receiving, by a comparison and separation component (104), the machine learning model;
- receiving, by the comparison and separation component (104), a threshold for a volume of data to be transferred between the edge layer (200) and the cloud layer (100) and an accuracy of the machine learning model;
- determining, by the comparison and separation component (104), the layer level k at which the machine learning model is to be separated based on an optimized balance between the received accuracy and the received threshold for the volume of data.

5. The method for distributed deployment of a machine learning model in an edge-to-cloud continuum according to any one of claims 1 to 4, the method further comprising the step of:
- obtaining (S304), by the edge device (201), field data from one or more field devices (301).

6. The method for distributed deployment of a machine learning model in an edge-to-cloud continuum according to claim 5, the method further comprising the step of:
- using (S305) the field data obtained by an inference engine (207) of the edge device (201) and sending the result of the inference engine (207) to the cloud layer (100) of the system for use in an inference engine (107) of the cloud layer (100).

7. A method for updating a deployed distributed machine learning model in an edge-to-cloud continuum of a multi-layer computer system adapted for distributed deployment of machine learning models, comprising the steps of:
- triggering (S401) the retraining of the deployed distributed machine learning model, wherein the deployed distributed machine learning model has cloud layers (***I*_{*k*+1}-*I_{N}***) which are deployed in a cloud layer (100) of the system and edge layers **(*Iₒ - Iₖ*)** which are deployed in an edge layer (200) of the system;
- retraining (S402) the cloud layers (***I*_{*k*+1}-*I_{N}***) of the machine learning model;
- measuring (S403) the accuracy of the model with the re-trained cloud layers (***I*_{*k*+1}-*I_{N}***), and comparing the accuracy of the model with the retrained cloud layers with the accuracy of the deployed distributed machine learning model;
- if the accuracy of the model with the retrained cloud layers (***I*_{*k*+1}-*I_{N}***) has decreased or if the accuracy of the model with the retrained cloud layers (***I*_{*k*+1}-*I_{N}***) has decreased beyond an acceptable degradation threshold, re-training (S404) completely the machine learning model including the edge layers **(*Iₒ-Iₖ*)** of the machine learning model, and deploying the newly trained cloud layers (***I*_{*k*+1}-*I_{N}***) of the machine learning model to the cloud layer of the system and deploying the newly trained edge layers **(*Iₒ*-*Iₖ*)** of the model to the edge layer (200) of the system,
- alternatively, if the accuracy of the model has not decreased or has not decreased beyond the acceptable degradation threshold, deploying (S405) the cloud layers (***I*_{*k*+1}-*I_{N}***) of the machine learning model within the cloud layer (100) of the system.

8. A cloud layer sub-system for a multi-layer computer system adapted for distributed deployment of machine learning models, cloud layer sub-system comprising:
- a comparison and separation component (104), configured to receive a machine learning model, and to separate the machine learning model, between a cloud portion to be deployed in a cloud layer (100) of the system and an edge portion to be deployed in an edge layer (200) of the system, wherein the machine learning model comprises several layers ***Iₒ*** to ***I_{N}*** where N is the total number of layers in the model, and the step of separating comprises determining a layer level k at which the machine learning model is to be separated between the edge portion comprising layers near a machine learning model input (***Iₒ*-*Iₖ*)** and a cloud portion comprising layers of the model **(*I*_{*k*+1}** - ***I_{N}*),** corresponding to the layers close to the model output, wherein the choice of the layer level k is determined based on either a threshold of data volume to be transferred between the different layers of the system, a minimum desired level of accuracy of the model, or a balanced combination between these two parameters;
- an edge connector component (106) configured to send the edge portion of the machine learning model to an edge device (201) in the edge layer (200) of the system and to receive from the edge device a result of an inference engine (207) of the edge device; and
- an inference engine (107) configured to use the received result of the inference engine (207) of the edge device (201) .

9. A cloud layer sub-system for a multi-layer computer system adapted for distributed deployment of machine learning models according to claim 8, wherein the comparison and separation component (104) is further configured to:
- receive an accuracy of the machine learning model;
- determine the layer level k at which the machine learning model is to be separated based on the accuracy of the model.

10. A cloud layer sub-system for a multi-layer computer system adapted for distributed deployment of machine learning models according to claim 8, wherein the comparison and separation component (104) is further configured to:
- receive a threshold for a volume of data to be transferred between the edge layer (200) and the cloud layer (100) ;
- determine the layer level k at which the machine learning model is to be separated based on the received threshold for the volume of data.

11. A cloud layer sub-system for a multi-layer computer system adapted for distributed deployment of machine learning models according to claim 8, wherein the comparison and separation component (104) is further configured to:
- receive a threshold for a volume of data to be transferred between the edge layer (200) and the cloud layer (100) and an accuracy of the machine learning model;
- determine the layer level k at which the machine learning model is to be separated based on an optimized balance between the received accuracy and the received threshold for the volume of data.

12. A edge device (201) for an edge layer (200) of a multi-layer computer system adapted for distributed deployment of machine learning models, the edge device comprising:
- a processor, a memory and a wired or wireless communication means for communicating with one or more field devices (301); and
- a cloud connector component (206), configured to receive from the cloud layer (100) of the system, an edge portion of a machine learning model to be deployed in an edge layer (200) of the system;
- an edge layer storage component (205), configured for storing the received edge portion of the machine learning model;
- an inference engine (207), configured to use the edge portion of the machine learning model stored in the edge layer storage component (205) with field data from the one or more field device (301) as input, and to output an inference result to the cloud using the cloud connector component (206).

13. A multi-layer computer system adapted for distributed deployment of machine learning models, the system comprising:
- a cloud layer sub-system according to any one of claims 8 to 11;
- one or more edge device (201) according to claim 12; and
- one or more field devices (301)

14. A computer program product comprising instructions which, when the program is executed by a computer, cause the computer to carry out the steps of the method of any one of claims 1 to 7.

15. A computer-readable storage medium comprising instructions which, when executed by a computer, cause the computer to carry out the steps of the method of any one of claims 1 to 7.
